# EUROPEAN PATENT SPECIFICATION

(11) **EP 1 186 337 B1**
(45) Date of publication and mention of the grant of the patent: **13.06.2007**
(21) Application number: 01250320.7
(22) Date of filing: 07.09.2001
(51) Int. Cl.: B01D 59/10

(54) **Method and apparatus for lithium isotope separation**
Verfahren und Vorrichtung zur Lithiumisotopentrennung
Procédé et appareil pour la séparation d'isotopes de lithium

(30) Priority: 08.09.2000 JP 2000272826
(43) Date of publication of application: 13.03.2002
(73) Proprietor: JAPAN ATOMIC ENERGY RESEARCH INSTITUTE, Chiyoda-ku, Tokyo (JP)
(72) Inventor: Tatenuma, Katsuyoshi, Mito-shi, Ibaraki-ken (JP); Kato, Eiji, Mito-shi, Ibaraki-ken (JP); Nanjo, Yoshiyasu, Mito-shi, Ibaraki-ken (JP); Kawamura, Hiroshi, c/o Japan Atomic Energy Rch Ins, Higashi-Ibaraki-gun, Ibaraki-ken (JP); Tsuchiya, Kunihiko, c/o Japan Atomic Engy. Rch Ins, Higashi-Ibaraki-gun, Ibaraki-ken (JP); Umeda, Miki, c/o Japan Atomic Energy Rch. Inst., Naka-gun, Ibaraki-ken (JP)
(74) Representative: Pfenning, Meinig & Partner GbR

(56) References cited:
- FR-A- 1 207 421
- FR-A- 1 216 418
- GB-A- 1 003 955
- GB-A- 1 066 377
- GB-A- 1 067 567
- DATABASE WPI Section Ch, Week 197831 Derwent Publications Ltd., London, GB; Class J01, AN 1978-55773A XP002303690 & JP 53 071796 A (TOYAMA YAKUHIN KOGY) 26 June 1978 (1978-06-26)

## Description

This invention relates to a method of performing Li isotope separation in a more environment friendly and efficient manner than the conventional amalgam process. The invention also relates to an apparatus for implementing the method. More specifically, the invention relates to a method of Li isotope separation which comprises the steps of separating ⁶Li from a feed containing ⁶Li and ⁷Li in admixture by electrolysis with a Li ion conductor and enriching the separated ⁶Li. The invention also relates to an apparatus for implementing the method.

The development of nuclear fusion energy is today's pressing demand in Japan and, in particular, the development of Li-containing ceramics as a tritium breeder for use in nuclear fusion reactors is one of the most important goals to be attained by nuclear energy scientists. Japan has no Li reserves and all quantities of Li to be consumed must be imported from overseas. Enriched ⁶Li which is an essential feed for the tritium breeder is so short of supply that satisfactorily enriched grades are difficult to obtain even in as small quantities as to be used for research purposes. In addition, enriched ⁶Li is a rare metal and very expensive.

To produce ⁶Li by selective extraction from the Li containing feed, the amalgam process is currently used because the isotope separation factor in this process which represents the efficiency of ⁶Li separation is comparatively high (1.02 - 1.07).

However, the amalgam process uses large quantities of mercury and considering the social need for future development of an environmentally benign technology, it is by no means best as a technique for producing Li resources within Japan.

Many R&D efforts have been made to propose environment friendly methods of Li isotope separation and a method using an inorganic adsorbent is under current review. However, the highest separation factor that can be achieved by inorganic adsorbents is no more than 1.01 which is too low to realize adequate performance. On the other hand, Li isotope separation method was proposed by he ion-exchange method with electrolyte solution. The separation factor by this method was higher than that of only ion-exchange method (1.001 - 1.01). However, this method was lower than that of the amalgam process.

GB-A-1 067 567, GB-A-1 066 377, JP 53 071 796 A, FR-A-1 207 421, GB-A-1 003 955 and FR-A-1 216 418 disclose methods and apparatuses for separating isotopes wherein ⁶Li and ⁷Li are separated by applying an electric filed to an Li ion conductor and either the ⁶Li ions are more concentrated close to the negative electrode or the solution is depleted in ⁶Li ions at the anode.

Naturally occurring Li takes two isotopic forms, ⁷Li and ⁶Li, and the abundance of ⁷Li having a mass of 7.015 is 92.58 at.% whereas ⁶Li with a mass of 6.015 occurs to the extent of 7.42 at.%. No matter which of the heretofore proposed methods is adopted, ⁶Li cannot be enriched to nearly 100% by a single separation procedure. Therefore, a practically feasible method of Li isotope separation is such that separation procedures are repeated to enhance the percent enrichment. To this end, the method must have the highest possible isotope separation factor.

The isotope separation factor (S) is defined in terms of relative numbers of isotope atoms before and after separation and expressed as the ratio of (⁷Li/⁶Li) _{before separation}/ (⁷Li/⁶Li) _{after separation}. An environment friendly separation technique should not use mercury or any other substances that will lead to environmental pollution but chemically stable materials should be used.

The present invention has been accomplished under these circumstances and has as an object providing a method of separating Li isotopes that does not use mercury or any other substances that have substantial environmental impact and which yet achieves high enough isotope separation factors and ensures chemical stability.

As the result of the studies made to attain this object, the present inventors found it effective to adopt a method in which a porous electrode was sintered to both ends of a Li ion conductor and a DC voltage was applied across the electrodes to cause electrolysis so that ⁶Li was enriched on the cathode side. To put in other words, a DC voltage is applied to both sides of the Li ion conductor at a value equal to or higher than its decomposition voltage so that ⁶Li migrates from the positive potential side where a mixture of ⁶Li and ⁷Li is present to the negative potential side, whereby ⁶Li is separated and enriched.

To be more specific, the Li isotope separating method of the invention comprises applying an electric field to a Li ion conductor so that on account of the difference between the ion conductivities of ⁶Li and ⁷Li through the Li ion conductor, ⁶Li is allowed to migrate through the Li ion conductor from the positive potential side to the negative potential side, whereby ⁶Li is separated from within the feed.
Fig. 1 shows in conceptual form the principle of lithium isotope separation by the method of the invention;
Fig. 2 shows in conceptual form an exemplary apparatus for lithium isotope separation by the method of the invention according to an embodiment thereof;
Fig. 3 is a graph showing the relationship between electrolysis time and Li isotope separation factor that was observed in Example 1 of the invention when ⁶Li was separated using La_{0.55}Li_{0.35}TiO₃ of perovskite type as a Li ion conductor;
Fig. 4 is a graph showing the relationship between electrolysis time and Li isotope separation factor that was observed in Example 2 of the invention when ⁶Li was separated using Li₄Ti₅O₁₂ of spinel type as a Li ion conductor; and
Fig. 5 is a graph showing the relationship between electrolysis time and Li isotope separation factor that was observed in Example 3 of the invention when ⁶Li was separated using Li₂Ti₃O₇ of ramsdellite type as a Li ion conductor.

Li ion-conductive solid electrolytes can be used as the Li ion conductor in the present invention. More specifically, one can use solid electrolyte ceramics comprising at least one member of the group consisting of LiI, LiI-CaI₂, LiI-CaO, LiAlCl₄, LiAlF₄, LiI-Al₂O₃, LiF-Al₂O₃, LiBr-Al₂O₃, Li₂O-TiO₂, La₂O₃-Li₂O-TiO₂, Li₃N, Li₃NI₂, Li₃N-LiI-LiOH, Li₃N-LiCl, Li₆NBr₃, LiSO₄, Li₄SiO₄, Li₃PO₄-Li₄SiO₄, Li₄GeO₄-Li₃VO₄, Li₄SiO₄-Li₃VO₄, Li₄GeO₄ -Zn₂GeO₂, Li₄SiO₄-LiMoO₄, Li₃PO₄-Li₄SiO₄, and LiSiO₄-Li₄ZrO₄. These solid electrolyte ceramics may be lithium oxides of either one of perovskite, spinel and ramsdellite types.

Other Li ion-conductive solid electrolytes that can be used in the invention are solid electrolytes in polymeric complex form that comprise a complex of poly(ethylene oxide) (PEO) and at least one alkali metal salt selected from the group consisting of LiBF₄, LiCF₃SO₃, NaSCN, NaCF₃SO₃, NaI, KSCN, and CsSCN.

An electrode is provided on both sides of either one of the Li ion-conductive solid electrolytes listed above and a voltage equal to or higher than the decomposition voltage is applied between the two electrodes so that ⁶Li is allowed to migrate through the Li ion-conductive solid electrolyte from the positive to negative potential side. As a result, ⁶Li is separated on the negative potential side and can hence be enriched. More specifically, an inorganic lithium compound is provided as a feed on one side of the Li ion-conductive solid electrolyte and heated to melt at a temperature not lower than its melting point and as the feed remains molten, an electric field is applied to the Li ion-conductive solid electrolyte, whereupon ⁶Li in the feed is allowed to migrate through the Li ion-conductive solid electrolyte so that it is separated and enriched from the feed. In this case, the inorganic lithium compound as the feed is preferably heated to no lower than a temperature at which the electrical conductivity of the Li ion conductor is at least 10⁻² S·cm⁻¹. By so doing, more Li ions can migrate through the Li ion-conductive solid electrolyte and the decomposition voltage can be held low.

The above-described method of Li isotope separation can be implemented by an apparatus comprising a feed vessel for accommodating a feed containing ⁶Li and ⁷Li in admixture, a Li ion conductor provided to form at least part of the walls of said feed vessel, a pair of electrodes one of which is provided on the side of the Li ion conductor which is inside said feed vessel and the other of which is provided on the side of the Li ion conductor which is outside said feed vessel, and a power supply for applying voltage to said electrodes.

The preferred embodiment of the invention is described below in a specific and detailed manner with reference to the accompanying drawings.

As already mentioned, the method of the invention for Li isotope separation is characterized by applying to the Li ion conductor a DC voltage not lower than the decomposition voltage so that ⁶Li is enriched on the cathode side. Since the Li ion conductors to be used in this method need be chemically stable, an inorganic solid electrolyte is preferably chosen. Inorganic solid electrolytes are either oxides or non-oxides. Non-oxide Li ion conductors typified by single-crystal Li₃N, noncrystalline P₂S₅-Li₂S-LiI and the halogenated spinel Li₂MCl₄ (M = Mg, Mn, Fe, etc.) are difficult to handle for various reasons such as being highly hygroscopic.

Oxide Li ion conductors are chemically stable and hence preferred. Examples include Li₃₊ₓP₁₋ₓSiₓO₄ of γ_{II}-Li₃PO₄ type, LiXO₄-Li₄YO₄ (X = P, As, V, etc.; Y = Si, Ge, Ti, etc.), Li₄Zn(GeO₄)₄, LiTi₂(PO₄)₃ of LiZr₂(PO₄)₃ type, Li₁₊ₓMₓTi₂₋ₓ(PO₄)₃ (M = metal element; x = coefficient), Li₄Ti₅O₁₂ of spinel type, La_{0.55}Li_{0.35}TiO₃, La_{0.59}Li_{0.35}TiO₃, Li₂Ti₃O₇ of ramsdellite type, aluminosilicate LiAlSi₂O₆, glass Li₄SiO₄-Li₃BO₃, and Li₂O-TiO₂-P₂O₅. Although these and many other oxides can be used, those having high electrical conductivity are preferred and Li₂O-TiO₂ oxides are advantageous. Particularly advantageous are Li₁₊ₓT₂₋ₓO₄ of spinel type, Li₂Ti₃O₇ of ramsdellite type and La_{0.55}Li_{0.35}TiO₃ of perovskite type.

Feed powders for these Li ion conductors can be prepared by ordinary methods and subsequently molded and sintered into desired shapes by known methods.

The electrode to be sintered to both sides of the molded Li ion conductor is desirably a porous Pt or Au electrode into which enriched Li ions can easily get. A Pt or Au paste is applied to both sides of the sintered Li ion conductor and then baked to form an electrode in the form of a porous Pt or Au film. Alternatively, the electrode can be formed by attaching a Pt or Au mesh to both sides of the Li ion conductor.

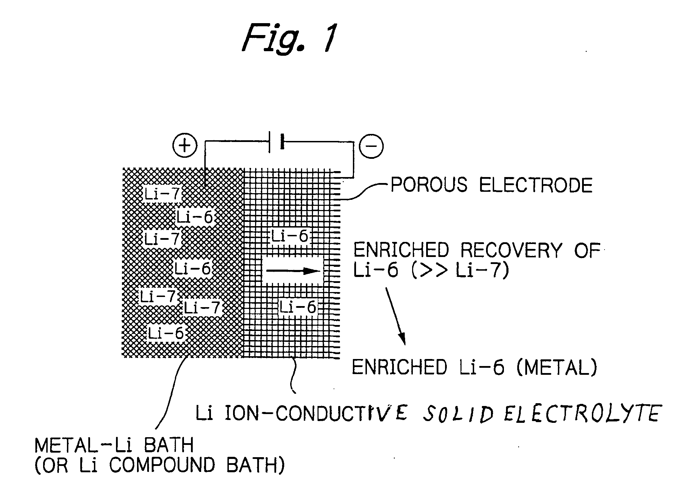

After sintering the electrodes to both sides of the Li ion conductor in the manner described above, the anode side is filled with LiHSO₄ as a feed containing ⁷Li and ⁶Li in admixture (see Fig. 1). Then, a DC voltage is applied which is at least equal to the value at which the Li ion conductor is decomposed at the anode and the cathode. Since ⁷Li and ⁶Li differ in mass by about 17%, the ⁷Li and ⁶Li ions migrate through the Li ion conductor at different speeds and the ⁶Li ion gets to the cathode faster than the ⁷Li ion. After a specified time, ⁶Li is enriched on the cathode side.

If the voltage applied across the Li ion conductor is less than its decomposition voltage, the Li ion may start migrating through the Li ion conductor but its shortage soon occurs at the anode and there is only insufficient current flow to sustain the migration of the Li ion. It is therefore necessary to continue the supply of the Li feed or apply a DC voltage no lower than the decomposition voltage of the Li ion conductor.

The electrical conductivity of the Li ion conductor generally depends on temperature and the higher the temperature, the more electrically conductive the Li ion conductor is and smooth migration of the Li ion is realized. If the temperature is too low, the conductivity of the Li ion conductor decreases and either the number of migrating Li ions decreases or the decomposition voltage becomes unduly high. Given these facts, it is preferred to have the Li ion migrating at a temperature at which the electrical conductivity of the Li ion conductor is about 10⁻² S·cm⁻¹.

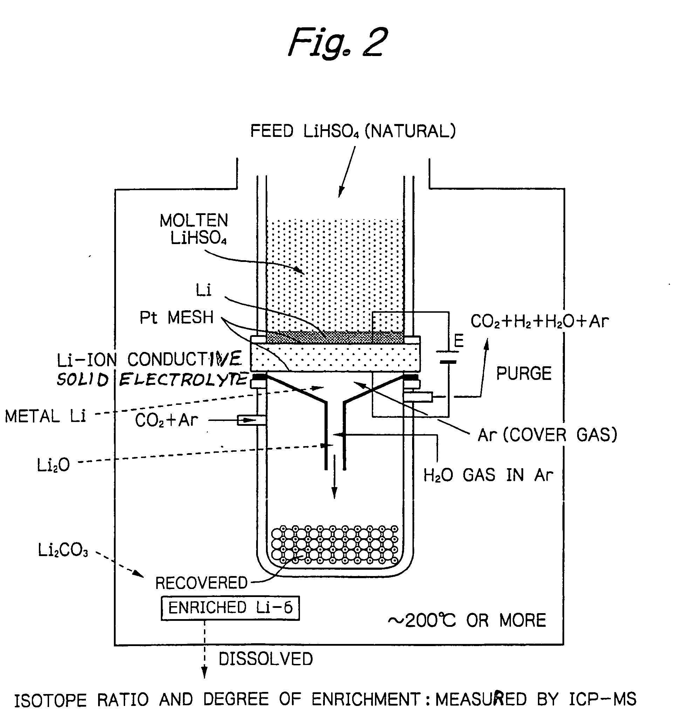

Fig. 2 shows an exemplary apparatus for lithium isotope separation by the above-described method. As shown, the apparatus has a feed vessel in which the feed LiHSO₄ is contained and melted thermally. The feed vessel is equipped with a heating means (not shown) to melt the feed LiHSO₄. Metallic Li precipitates on the bottom of the feed vessel.

Listed below are exemplary feed materials and their melting points in parentheses: metallic Li (180°C), LiHSO₄ (120°C), LiH₂PO₄, (120°C), LiClO₃ (128°C), LiF (848°C), LiCl (605°C), LiBr (550°C), LiI (446°C), and LiI·3H₂O (73°C). In the feed vessel, these feed materials are heated to their melting points or higher temperatures so that they become molten.

The bottom wall of the feed vessel is formed of the Li ion conductor having a Pt mesh electrode attached to both sides. The Pt mesh electrode is supplied with such a voltage that the side which contacts the feed vessel is an anode and the side which faces an enrichment vessel below the feed vessel is a cathode. As a result, ⁶Li migrates from the anode to the cathode side of the Li ion conductor and the enriched ⁶Li precipitates in the enrichment vessel positioned under the cathode of the Li ion conductor. A hopper is provided in the upper part of the enrichment vessel and under the Li ion conductor. The precipitated ⁶Li falls down the hopper to be collected on the bottom of the enrichment vessel.

The interior of the enrichment vessel is constantly evacuated to maintain negative pressure. A cover gas Ar is blown against the cathode surface of the Li ion conductor. The interior of the hopper is supplied with H₂O gas as carried by Ar gas. The interior of the enrichment vessel excepting the hopper is supplied with CO₂ gas as carried by Ar gas. The enriched ⁶Li reacts with CO₂ gas and the resulting Li₂CO₃ is recovered.

The process of condensing ⁶Li in the feed and recovering the enriched ⁶Li is represented by the following reaction schemes. Reaction (1) at the anode is only speculative and has not been completely verified. In addition to LiHSO₄, other feed materials may be used and they include metallic Li, LiF and LiH₂SO₄.

LiHSO₄ → anode → ⁷Li⁽⁺⁾ + ⁶Li⁽⁺⁾ + HSO₄⁽⁻⁾ (1)

⁷Li⁽⁺⁾ + ⁶Li⁽⁺⁾ → cathode -> enriched ⁶Li (metal) (2)

enriched 2⁶Li + H₂O → Li₂O + H₂ (3)

Li₂O + CO₂ → Li₂CO₃ (4)

According to the above-described method of the invention for Li isotope separation using the Li ion conductor, ⁶Li can be enriched at the cathode with an average isotope separation factor of at least 1.03 - 1.2 and this value is comparable to or higher than what has been attained by the amalgam process.

The following examples are provided for the purpose of further illustrating the present invention but are in no way to be taken as limiting.

### Example 1

An ethanol solution of titanium tetraisopropoxide (0.154 mol) and an aqueous solution of lithium acetate (0.537 mol) and lanthanum acetate (0.084 mol) were mixed and allowed to gel under stirring. Thereafter, the reaction mixture was transferred into a rotary evaporator and the solvent was distilled off under vacuum at 50°C over 12 hours to give a precursor powder. The precursor powder was introduced into a baking furnace maintaining air atmosphere, heated to 1100°C at a rate of 100°C per hour, held at 1100°C for 12 hours and later restored to room temperature to yield La_{0.55}Li_{0.35}TiO₃ of perovskite type in powder form.

This powder was wet ground with a ball mill for 10 hours in the presence of ethanol to obtain particles having an average size of 1 µm or smaller. A weighed portion (500 mg) of the particles was shaped into a disk by uniaxial pressing at a molding pressure of about 300 MPa. The disk was sintered in air atmosphere at 1175°C for 24 hours to produce a Li ion conductor disk made of La_{0.55}Li_{0.35}TiO₃ of perovskite type; it had a diameter of 11.5 mm, a thickness of 0.97 mm, and a relative density of 91.3%.

A Pt paste was applied to both sides of the Li ion conductor disk and baked at 900°C to form a porous electrode. By complex impedance measurement, the decomposition voltage of the Li ion conductor was measured. On the basis of this measurement, the conditions for decomposition were set as follows: decomposition temperature, 100°C; decomposition voltage, 5.0 V.

The Li ion conductor disk was fitted into an apparatus of the type shown in Fig. 2 such that it formed the bottom surface of the feed vessel and the top surface of the enrichment vessel. Through the mechanism described hereinabove, ⁶Li was separated from the feed and enriched; after a specified time, Li was recovered from the cathode by dissolving it with nitric acid. The Li isotope separation factor S of the process adopted in Example 1 was computed by ICP-MS analysis.

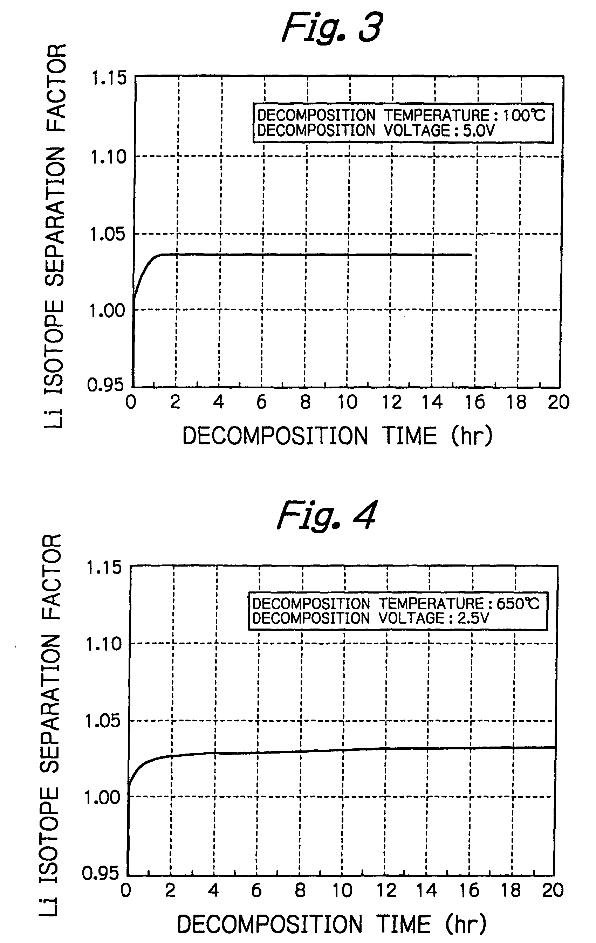

Fig. 3 is a plot of the Li isotope separation factor as a function of the decomposition time. Obviously, the Li isotope separation factor was about 1.03 - 1.04.

### Example 2

An ethanol solution of titanium tetraisopropoxide (0.500 mol) and an aqueous solution of lithium acetate (0.400 mol) were mixed and allowed to gel under stirring. Thereafter, the reaction mixture was transferred into a rotary evaporator and the solvent was distilled off under vacuum at 50°C over 12 hours to give a precursor powder. The precursor powder was introduced into a baking furnace in air atmosphere, heated to 700°C at a rate of 100°C per hour and held at 700°C for 5 hours to yield Li₄Ti₅O₁₂ of spinel type in powder form.

This powder was wet ground with a ball mill for 10 hours in the presence of ethanol to obtain particles having an average size of 1 µm or smaller. A weighed portion (400 mg) of the particles was shaped into a disk by uniaxial pressing at a molding pressure of about 300 MPa. The disk was sintered in a baking furnace in air atmosphere at 900°C for 10 hours to produce a Li ion conductor disk made of Li₄Ti₅O₁₂ of spinel type; it had a diameter of 11.8 mm, a thickness of 1.08 mm, and a relative density of 87.5%.

A Pt paste was applied to both sides of the Li ion conductor disk and baked at 900°C to form a porous electrode. By complex impedance measurement, the decomposition voltage of the Li ion conductor was measured. On the basis of this measurement, the conditions for decomposition were set as follows: decomposition temperature, 650°C; decomposition voltage, 2.5 V.

The Li ion conductor disk was fitted into an apparatus of the type shown in Fig. 2 such that it formed the bottom surface of the feed vessel and the top surface of the enrichment vessel. Through the mechanism described hereinabove, ⁶Li was separated from the feed and enriched; after a specified time, Li was recovered from the cathode by dissolving it with nitric acid. The Li isotope separation factor S of the process adopted in Example 2 was computed by ICP-MS analysis.

Fig. 4 is a plot of the Li isotope separation factor as a function of the decomposition time. Obviously, the Li isotope separation factor was about 1.03.

### Example 3

An ethanol solution of titanium tetraisopropoxide (0.300 mol) and an aqueous solution of lithium acetate (0.200 mol) were mixed and allowed to gel under stirring. Thereafter, the reaction mixture was transferred into a rotary evaporator and the solvent was distilled off under vacuum at 50°C over 12 hours to give a precursor powder. The precursor powder was introduced into a baking furnace in air atmosphere, heated to 900°C at a rate of 100°C per hour and held at 900°C for 5 hours to yield Li₂Ti₃O₇ of ramsdellite type in powder form.

This powder was wet ground with a ball mill for 10 hours in the presence of ethanol to obtain particles having an average size of 1 µm or smaller. A weighed portion (400 mg) of the particles was shaped into a disk by uniaxial pressing at a molding pressure of about 300 MPa. The disk was sintered in a baking furnace in air atmosphere at 1100°C for 10 hours to produce a Li ion conductor disk made of Li₂Ti₃O₇ of ramsdellite type; it had a diameter of 12.0 mm, a thickness of 1.03 mm, and a relative density of 86.3%.

A Pt paste was applied to both sides of the Li ion conductor disk and baked at 900°C to form a porous electrode. By complex impedance measurement, the decomposition voltage of the Li ion conductor was measured. On the basis of this measurement, the conditions for decomposition were set as follows: decomposition temperature, 427°C; decomposition voltage, 3.5 V.

The Li ion conductor disk was fitted into an apparatus of the type shown in Fig. 2 such that it formed the bottom surface of the feed vessel and the top surface of the enrichment vessel. Through the mechanism described hereinabove, ⁶Li was separated from the feed and enriched; after a specified time, Li was recovered from the cathode by dissolving it with nitric acid. The Li isotope separation factor S of the process adopted in Example 3 was computed by ICP-MS analysis.

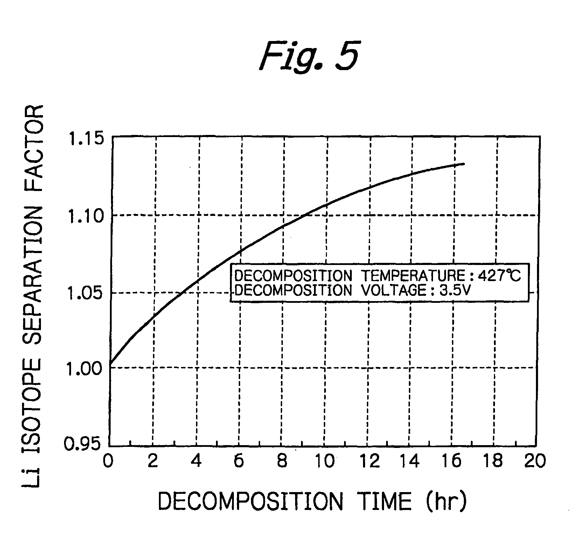

Fig. 5 is a plot of the Li isotope separation factor as a function of the decomposition time. Obviously, the Li isotope separation factor was about 1.06. It increased with the passage of time and, after cycle tests, rose to a value greater than 1.2.

As described on the foregoing pages, the use of the Li ion conductor in the present invention enables Li isotopes to be separated with a factor comparable to or higher than what has been attained by the amalgam process. Since no mercury is used, the Li isotope separating and enriching system that is constructed in accordance with the invention is environmentally benign. Using the Li ion conductor as a Li pump, one can separate and enrich ⁶Li from a molten salt. In short, a method and an apparatus for separating Li isotopes can be provided according to a specific object.

## Claims

1. A method of separating ⁶Li from a feed containing ⁶Li and ⁷Li in admixture by applying an electric field to a Li ion conductor so that on account of the difference between the ion conductivities of ⁶Li and ⁷Li through said Li ion conductor, ⁶Li is allowed to migrate through said Li ion conductor from the positive potential side to the negative potential side, whereby ⁶Li is separated from within the feed, **characterized in that** the Li ion conductor is a Li ion-conductive solid electrolyte.

2. The method according to claim 1, wherein the Li ion-conductive solid electrolyte is a solid electrolyte ceramic comprising at least one member of the group consisting of LiI, LiI-CaI₂, LiI-CaO, LiAlCl₄, LiI-Al₂O₃, LiF-Al₂O₃, LiBr-Al₂O₃, Li₂O-TiO₂, La₂O₃-Li₂O-TiO₂, Li₃N, Li₃NI₂, Li₃N-LiI-LiOH, Li₃N-LiCl, Li₆NBr₃, LiSO₄, Li₄SiO₄, Li₃PO₄-Li₄SiO₄, Li₄GeO₄-Li₃VO₄, Li₄SiO₄-Li₃VO₄, Li₄GeO₄-Zn₂GeO₂, Li₄SiO₄-LiMoO₄, Li₃PO₄-Li₄SiO₄, and LiSiO₄-Li₄ZrO₄.

3. The method according to claim 2, wherein the Li ion-conductive solid electrolyte is a lithium oxide of either one of perovskite, spinel and ramsdellite types.

4. The method according to claim 1, wherein the Li ion-conductive solid electrolyte is a solid electrolyte in polymeric complex form that comprises a complex of poly(ethylene oxide) and at least one alkali metal salt selected from the group consisting of LiBF₄, LiCF₃SO₃, NaSCN, NaCF₃SO₃, NaI, KSCN, and CsSCN.

5. The method according to any one of claims 1 to 4, wherein an electrode is provided on both sides of the Li ion-conductive solid electrolyte and a voltage equal to or higher than the decomposition voltage is applied between the two electrodes so that ⁶Li is allowed to migrate through the Li ion-conductive solid electrolyte.

6. The method according to any one of claims 1 to 5, wherein an inorganic lithium compound is provided as a feed on one side of the Li ion-conductive solid electrolyte and heated to melt at a temperature not lower than its melting point and as the feed remains molten, an electric field is applied to the Li ion-conductive solid electrolyte.

7. The method according to any one of claims 1 to 6, wherein the feed is heated to no lower than a temperature at which the electrical conductivity is at least 10⁻² S·cm⁻¹.

8. An apparatus for separating ⁶Li from a feed containing ⁶Li and ⁷Li in admixture, which comprises a feed vessel for accommodating the feed containing ⁶Li and ⁷Li in admixture, a Li ion-conductive solid electrolyte provided to form at least part of the walls of said feed vessel, a pair of electrodes one of which is provided on the side of the Li ion-conductive solid electrolyte which is outside said feed vessel, and a power supply for apply for applying voltage to said electrodes.

## Patentansprüche

1. Verfahren zum Trennen von ⁶Li von einer ⁶Li und ⁷Li in Beimengung enthaltenden Charge durch Anlegen eines elektrischen Feldes an einen Li Ionenleiter, so dass wegen der Differenz zwischen der Ionenleitfähigkeit von ⁶Li und ⁷Li durch den Li Ionenleiter ⁶Li von der positiven Potentialseite zur negativen Potentialseite durch den Li Ionenleiter wandern kann, wobei ⁶Li aus dem Inneren der Charge getrennt wird, **dadurch gekennzeichnet, dass** der Li Ionenleiter ein Li Ionenleitender fester Elektrolyt ist.

2. Verfahren nach Anspruch 1, bei dem der Ionenleitende feste Elektrolyt eine massive Elektrolytkeramik ist, die mindestens ein Element der Gruppe bestehend aus LiI, LiI-CaI₂, LiI-CaO, LiAlC1₄, LiI-Al₂O₃, LiF-Al₂O₃, LiBr-Al₂O₃, Li₂O-TiO₂, La₂O₃-Li₂O-TiO₂, Li₃N, Li₃NI₂, Li₃N-LiI-LiOH, Li₃N-LiCl, Li₆NBr₃, LiSO₄, Li₄SiO₄, Li₃PO₄-Li₄SiO₄, Li₄GeO₄-Li₃VO₄, Li₄SiO₄-Li₃VO₄, L₁₄GeO₄-Zn₂GeO₂, Li₄SiO₄-LiMoO₄, Li₃PO₄-Li₄SiO₄, und LiSiO₄-Li₄ZrO₄ umfasst.

3. Verfahren nach Anspruch 2, bei dem der Ionenleitende feste Elektrolyt ein Lithiumoxid von einer der Arten Perovskit, Spinel und Ramsdellit ist.

4. Verfahren nach Anspruch 1, bei dem der Ionenleitende feste Elektrolyt ein fester Elektrolyt in polymerischer komplexer Form ist, die ein Komplex eines Polyethylenoxids und mindestens ein alkalisches Metallsalz, ausgewählt aus der Gruppe bestehend aus LiBF₄, LiCF₃SO₃, NaSCN, NaCF₃SO₃, NaI, KSCN und CsSCN umfasst.

5. Verfahren nach einem der Ansprüche 1 bis 4, bei dem eine Elektrode auf beiden Seiten des Li Ionen-leitenden festen Elektrolyts vorgesehen ist und eine Spannung gleich oder höher als die Zerfallsspannung zwischen den zwei Elektroden angelegt wird, so dass ⁶Li durch den Li Ionen-leitenden festen Elektrolyten wandern kann.

6. Verfahren nach einem der Ansprüche 1 bis 5, bei dem eine anorganische Lithiumverbindung als eine Charge auf einer Seite des Li Ionen-leitenden festen Elektrolyten vorgesehen ist und aufgeheizt wird, um bei einer Temperatur zu schmelzen, die nicht niedriger ist als ihr Schmelzpunkt, und während die Charge geschmolzen bleibt, wird ein elektrisches Feld an den Li Ionen-leitenden festen Elektrolyten angelegt.

7. Verfahren nach einem der Ansprüche 1 bis 6, bei dem die Charge auf eine Temperatur geheizt wird, die nicht niedriger ist als eine Temperatur, bei der die elektrische Leitfähigkeit mindestens 10⁻² S cm² ist.

8. Vorrichtung zum Trennen von ⁶Li von einer ⁶Li und ⁷Li in Beimengung enthaltenden Charge, die ein Chargengefäß zum Aufnehmen der ⁶Li und ⁷Li in Beimengung enthaltenden Charge, einen Li Ionen-leitenden festen Elektrolyten, der vorgesehen ist, um mindestens einen Teil der Wände des Chargengefäßes zu bilden, ein Paar von Elektroden, von denen eine an der Seite des Li Ionen-leitenden festen Elektrolyten vorgesehen ist, der außerhalb des Chargengefäßes ist, und eine Spannungsversorgung zum Aufbringen einer Spannung an die Elektroden umfasst.

## Revendications

1. Procédé de séparation de ⁶Li à partir d'une charge contenant un mélange de ⁶Li et de ⁷Li, en appliquant un champ électrique à un conducteur d'ions Li, de telle sorte que, étant donné la différence entre les conductivités d'ions de ⁶Li et de ⁷Li à travers ledit conducteur d'ions Li, ⁶Li peut migrer à travers ledit conducteur d'ions Li, du côté du potentiel positif au côté du potentiel négatif, moyennant quoi ⁶Li est séparé à partir de l'intérieur de la charge, **caractérisé en ce que** le conducteur d'ions Li est un électrolyte solide conducteur d'ions Li.

2. Procédé selon la revendication 1, dans lequel l'électrolyte solide conducteur d'ions Li est une céramique électrolytique solide comprenant au moins un élément du groupe consistant en LiI, LiI-CaI₂, LiI-CaO, LiAlCl₄, LiI-Al₂O₃, LiF-Al₂O₃, LiBr-Al₂O₃, Li₂O-TiO₂, La₂O₃-Li₂O-TiO₂, Li₃N, Li₃NI₂, Li₃N-LiI-LiOH, Li₃N-LiCl, Li₆NBr₃, LiSO₄, Li₄SiO₄, Li₃PO₄-Li₄SiO₄, Li₄GeO₄-Li₃VO₄, Li₄SiO₄-Li₃VO₄, Li₄GeO₄-Zn₂GeO₂, Li₄SiO₄-LiMoO₄, Li₃PO₄-Li₄SiO₄, et LiSiO₄-Li₄ZrO₄.

3. Procédé selon la revendication 2, dans lequel l'électrolyte solide conducteur d'ions Li est un oxyde de lithium de l'un quelconque des types perovskite, spinelle et ramsdellite.

4. Procédé selon la revendication 1, dans lequel l'électrolyte solide conducteur d'ions Li est un électrolyte solide sous la forme d'un complexe polymère, qui comprend un complexe de polyoxyde d'éthylène, et au moins un sel métallique alcalin choisi dans le groupe consistant en LiBF₄, LiCF₃SO₃, NaSCN, NaCF₃SO₃, NaI, KSCN, et CsSCN.

5. Procédé selon l'une quelconque des revendications 1 à 4, dans lequel une électrode est fournie sur les deux côtés de l'électrolyte solide conducteur d'ions Li, et une tension égale ou supérieure à la tension de décomposition est appliquée entre les deux électrodes, de telle sorte que ⁶Li peut migrer à travers l'électrolyte solide conducteur d'ions Li.

6. Procédé selon l'une quelconque des revendications 1 à 5, dans lequel un composé de lithium inorganique est fourni comme charge sur un côté de l'électrolyte solide conducteur d'ions Li, et chauffé pour fondre à une température supérieure à son point de fusion, et à mesure que la charge reste fondue, un champ électrique est appliqué à l'électrolyte solide conducteur d'ions Li.

7. Procédé selon l'une quelconque des revendications 1 à 6, dans lequel la charge est chauffée à une température supérieure à une température à laquelle la conductivité électrique est d'au moins 10⁻² S•cm⁻¹.

8. Appareil pour séparer ⁶Li d'une charge contenant un mélange de ⁶Li et de ⁷Li, qui comprend un récipient de charge pour loger la charge contenant un mélange de ⁶Li et de ⁷Li, un électrolyte solide conducteur d'ions Li fourni pour former au moins une partie des parois dudit récipient de charge, une paire d'électrodes dont l'une est fournie sur le côté de l'électrolyte solide conducteur d'ions Li, qui est extérieure audit récipient de charge, et une source d'alimentation pour appliquer la tension sur lesdites électrodes.
